# FASCICULE DE BREVET EUROPEEN

(11) **EP 2 356 738 B1**
(45) Date de publication et mention de la délivrance du brevet: **24.10.2012**
(21) Numéro de dépôt: 09749128.6
(22) Date de dépôt: 12.11.2009
(51) Int. Cl.: H02P 3/18

(54) **SYSTÈME DE FREIN ÉLECTRIQUE A PERTES MAGNÉTIQUES**
ELEKTRISCHES BREMSENSYSTEM MIT MAGNETISCHEN VERLUSTEN
ELECTRIC BRAKE SYSTEM WITH MAGNETIC LOSS

(30) Priorité: 14.11.2008 FR 0857726
(43) Date de publication de la demande: 17.08.2011
(73) Titulaire: HISPANO SUIZA, 92700 Colombes (FR)
(72) Inventeur: DE WERGIFOSSE, Eric, F-77515 Saint Augustin (FR)
(74) Mandataire: Ilgart, Jean-Christophe
(86) Numéro de dépôt international: PCT/EP2009/065014
(87) Numéro de publication internationale: WO 2010/055074

(56) Documents cités:
- US-A- 6 072 291
- US-A1- 2005 013 145
- US-A1- 2008 074 074
- DAVID KI-WAI CHENG ET AL: "Design, modeling, and analysis of integrated magnetics for power converters" POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 1, 18 juin 2000 (2000-06-18), pages 320-325, XP010517257 ISBN: 978-0-7803-5692-4

## Description

### DOMAINE TECHNIQUE

L'invention se rapporte à un système de frein électrique à pertes magnétiques destiné à dissiper l'énergie produite par une machine électromécanique lors de phase de freinage, lorsque le réseau d'alimentation ou son interface n'est pas bidirectionnel.

### ÉTAT DE LA TECHNIQUE ANTÉRIEURE

Aussi bien dans le cas où la machine électromécanique est alimentée directement par une tension continue (moteur à balais par exemple), que dans le cas où elle est alimentée par une tension alternative via un onduleur, l'énergie générée lors des phases de freinage de la machine, est généralement dissipée par un système connecté sur le bus DC. Dans la majorité des cas, cette dissipation est assurée par des résistances. Lorsque ces résistances doivent stocker des énergies importantes et/ou lorsqu'elles doivent résister à un grand nombre de cycles de fonctionnement, celles-ci deviennent lourdes, encombrantes et coûteuses. De plus, le flux de dissipation vers la paroi du boîtier où elles sont fixées est, dans ces cas, difficile à maîtriser. Ceci rend la gestion thermique de l'application non aisée.

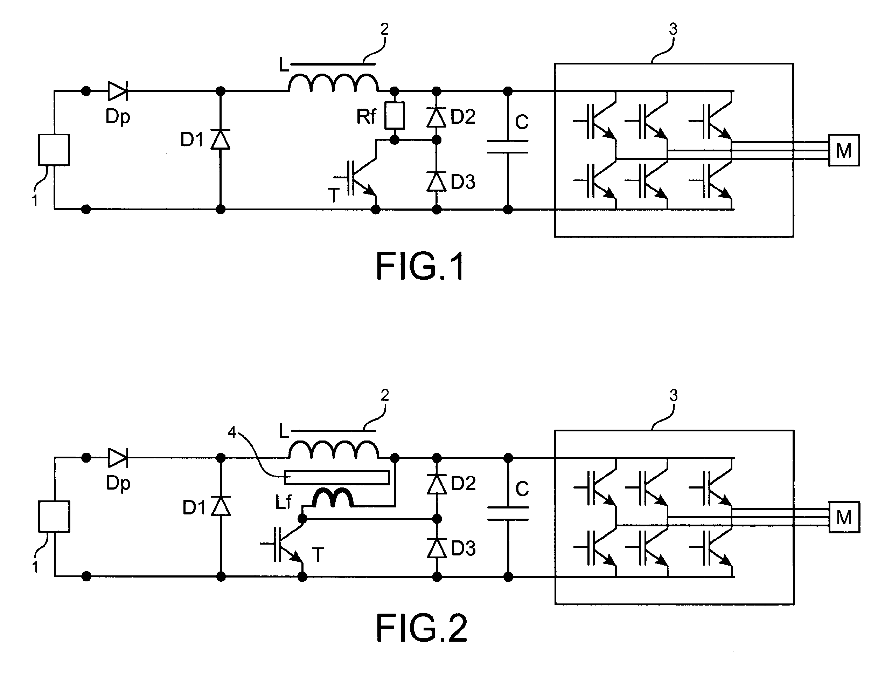

La figure 1 est un schéma électrique montrant un système classique de frein électrique avec dissipation de l'énergie restituée par le freinage dans une résistance. Ce système de frein électrique est disposé dans le circuit d'alimentation d'une machine électromécanique M. Le circuit d'alimentation comprend une source de tension continue 1 alimentant, via une diode de protection Dp, un onduleur 3 aux bornes duquel est branchée la machine électromécanique M. Entre la cathode de la diode de protection Dp et la borne - de la source de tension continue 1 est branchée, en inverse, une diode de roue libre D1 et un filtre de mode différentiel. Le filtre de mode différentiel comprend une inductance L, bobinée autour d'un circuit magnétique 2, et un condensateur C. L'onduleur 3 est branché aux bornes du condensateur C. Le système de frein électrique comprend une première branche comprenant deux diodes D2 et D3 branchées en série et en inverse aux bornes du condensateur C. Une deuxième branche comprenant une résistance de freinage Rf en série avec un transistor (IGBT ou autre) référencé T est connectée aux bornes du condensateur C. Le point milieu entre la résistance de freinage Rf et le transistor T est relié au point milieu situé entre les diodes D2 et D3. Lors d'un freinage de la machine électromécanique M, l'énergie de freinage est dissipée dans la résistance Rf.

Le fonctionnement du circuit de la figure 1 est le suivant. Lorsque la machine électromécanique M fournit de l'énergie mécanique, le transistor T est commandé pour être en mode bloqué et aucun courant ne circule dans la résistance Rf. Les diodes D2 et D3 sont inopérantes dans cette phase. Lorsque la machine électromécanique reçoit de l'énergie mécanique, l'onduleur 3 renvoie de l'énergie électrique vers le condensateur C. En rendant conducteur le transistor T, habituellement par le biais d'une commande MLI (pour Modulation de Largeur d'Impulsion) on provoque alors le passage d'un courant électrique dans la résistance Rf et la dissipation sous forme thermique de l'énergie électrique renvoyée par la machine électromécanique à l'entrée de l'onduleur. Les diodes D2 et D3 servent de diode de roue libre pour l'ensemble des inductances parasites de la branche constituée par la résistance Rf et le transistor T.

Le document US-A-6 072 291 divulgue un système de frein électrique pour une machine électromécanique branchée aux bornes de sortie d'un onduleur dont les bornes d'entrées sont alimentées par une source de tension continue. Le système comprend un circuit électrique branché entre les bornes d'entrée de l'onduleur et comprenant, connectés en série :
- des moyens de dissipation d'une énergie électrique renvoyée par la machine électromécanique aux bornes d'entrée de l'onduleur lors d'une phase de freinage de la machine électromécanique,
- des moyens de commutation destinés à fermer ledit circuit électrique lors d'une phase de freinage de la machine électromécanique et à ouvrir ledit circuit électrique en l'absence d'une phase de freinage de la machine électromécanique.

Selon le brevet US-A-6 072 291, l'énergie électrique, qui est renvoyée aux bornes d'entrée de l'onduleur lors d'une phase de freinage, est principalement dissipée dans une résistance de freinage.

### EXPOSÉ DE L'INVENTION

L'invention propose une autre solution que la dissipation dans une résistance électrique, pour le freinage électrique d'une machine électromécanique. La solution proposée est de dissiper dans le noyau d'une inductance l'énergie produite par une machine électromécanique lors d'une phase de freinage, cette inductance partageant par exemple le même noyau magnétique que l'inductance de filtrage de l'alimentation en courant continu.

Les pertes magnétiques dans le noyau dépendent de la fréquence et de l'amplitude de la variation d'induction. La quantité d'énergie dissipée dans le noyau peut donc être dosée à tout instant par une commande MLI à fréquence fixe ou variable appliquée au transistor T.

L'invention a donc pour objet un système de frein électrique pour une machine électromécanique branchée aux bornes de sortie d'un onduleur dont les bornes d'entrées sont alimentées par une source de tension continue, le système comprenant un circuit électrique branché entre les bornes d'entrée de l'onduleur et comprenant, connectés en série :
- des moyens de dissipation d'une énergie électrique renvoyée par la machine électromécanique aux bornes d'entrée de l'onduleur lors d'une phase de freinage de la machine électromécanique,
- des moyens de commutation destinés à fermer ledit circuit électrique lors d'une phase de freinage de la machine électromécanique et à ouvrir ledit circuit électrique en l'absence d'une phase de freinage de la machine électromécanique,
caractérisé en ce que les moyens de dissipation d'une énergie électrique comprennent une inductance bobinée autour d'un circuit magnétique, l'énergie récupérée par l'inductance lors d'une phase de freinage étant dissipée par perte d'hystérésis et courants de Foucault dans le circuit magnétique, aucune résistance de dissipation de l'énergie électrique renvoyée par la machine électromécanique n'étant prévue à l'entrée de l'onduleur.

Un filtre de mode différentiel peut être utilisé. Ce filtre peut comprendre une inductance de filtrage, bobinée autour d'un circuit magnétique et placée en série entre la source de tension continue et l'onduleur, et un condensateur de filtrage placé entre les bornes d'entrée de l'onduleur. L'inductance de filtrage et l'inductance de dissipation peuvent avoir un circuit magnétique commun ou non suivant le mode de réalisation.

Selon un mode de réalisation, l'inductance de filtrage et l'inductance de dissipation utilisent le même circuit magnétique mais ne sont pas couplées magnétiquement entre elles. Dans ce cas, le circuit magnétique peut être un circuit en EI ou EE, l'inductance de filtrage comprenant deux enroulements identiques connectés en série, chaque enroulement étant bobiné sur une jambe externe du E, l'inductance de dissipation étant bobinée sur la jambe centrale du E. La disposition inverse est également possible, l'inductance de dissipation comprenant deux enroulements identiques connectés en série, chaque enroulement étant bobiné sur une jambe externe du E, l'inductance de filtrage étant bobinée sur la jambe centrale du E.

Selon un autre mode de réalisation, l'inductance de filtrage et l'inductance de dissipation sont couplées entre elles. Dans ce cas, le circuit magnétique peut être un circuit en forme de O présentant deux branches opposées de bobinage, l'inductance de filtrage étant constituée de deux enroulements connectés en série, chacun étant bobiné autour d'une branche, l'inductance de dissipation étant constituée de deux enroulements connectés en série, chacun étant bobiné également autour d'une branche.

L'invention s'applique à toutes machines électromécaniques réversibles connectées à un bus DC, directement ou via un convertisseur. Dans la plupart des applications, il s'agira d'une machine synchrone ou asynchrone triphasée connectée au bus DC via un onduleur triphasé. Pour la simplicité de l'explication, seul ce cas sera présenté, mais cela n'exclut en aucune manière les autres cas de machines/convertisseurs.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1, déjà décrite, est un schéma électrique représentant un système de frein électrique, disposé dans le circuit d'alimentation électrique d'une machine électromécanique, avec dissipation de l'énergie restituée par le freinage dans une résistance, selon l'art antérieur,
- la figure 2 est un schéma électrique représentant un premier système de frein électrique, disposé dans le circuit d'alimentation électrique d'une machine électromécanique, avec dissipation de l'énergie restituée par le freinage dans une inductance bobinée autour d'un circuit magnétique différent de celui de l'inductance de filtrage, selon l'invention,
- la figure 3 est un schéma électrique représentant un deuxième système de frein électrique, disposé dans le circuit d'alimentation électrique d'une machine électromécanique, avec dissipation de l'énergie restituée par le freinage dans une inductance bobinée autour d'un circuit magnétique commun avec celui de l'inductance de filtrage, selon l'invention,
- la figure 4 est un schéma électrique représentant un troisième système de frein électrique, disposé dans le circuit d'alimentation électrique d'une machine électromécanique, avec dissipation de l'énergie restituée par le freinage dans une inductance bobinée autour d'un circuit magnétique commun avec celui de l'inductance de filtrage mais sans couplage magnétique, selon l'invention,
- la figure 5 représente un circuit magnétique équipé d'inductances, utilisable dans le système de frein électrique, décrit à la figure 4, selon l'invention,
- la figure 6 est un schéma électrique représentant un quatrième système de frein électrique, disposé dans le circuit d'alimentation électrique d'une machine électromécanique, avec dissipation de l'énergie restituée par le freinage dans une inductance bobinée autour d'un circuit magnétique, selon l'invention,
- la figure 7 est une vue en perspective d'un circuit magnétique équipé d'inductances, utilisable dans le système de frein électrique, sauf pour celui décrit à la figure 4, selon l'invention,
- la figure 8 illustre la manière de disposer un circuit magnétique, utilisable dans le système de frein électrique selon l'invention, dans un boîtier logeant le système de frein électrique.

### EXPOSÉ DÉTAILLÉ DE MODES DE RÉALISATION PARTICULIERS

Dans la partie de la description qui va suivre, les éléments des schémas électriques qui sont identiques aux éléments représentés sur le schéma électrique de la figure 1 seront référencés à l'identique.

La figure 2 est un schéma électrique représentant un premier système de frein électrique, disposé dans le circuit d'alimentation d'une machine électromécanique (un moteur triphasé par exemple), avec dissipation de l'énergie restituée par le freinage dans une inductance bobinée autour d'un circuit magnétique.

Le schéma de la figure 2 diffère de celui de la figure 1 en ce que la résistance Rf de dissipation de l'énergie de freinage est remplacée par une inductance Lf bobinée autour d'un circuit magnétique 4. Dans ce schéma, il n'y a pas de couplage et aucun élément commun entre les inductances L et Lf. Lors d'une phase de freinage, l'énergie récupérée par l'inductance Lf est dissipée par pertes d'hystérésis et courants de Foucault dans le circuit magnétique 4.

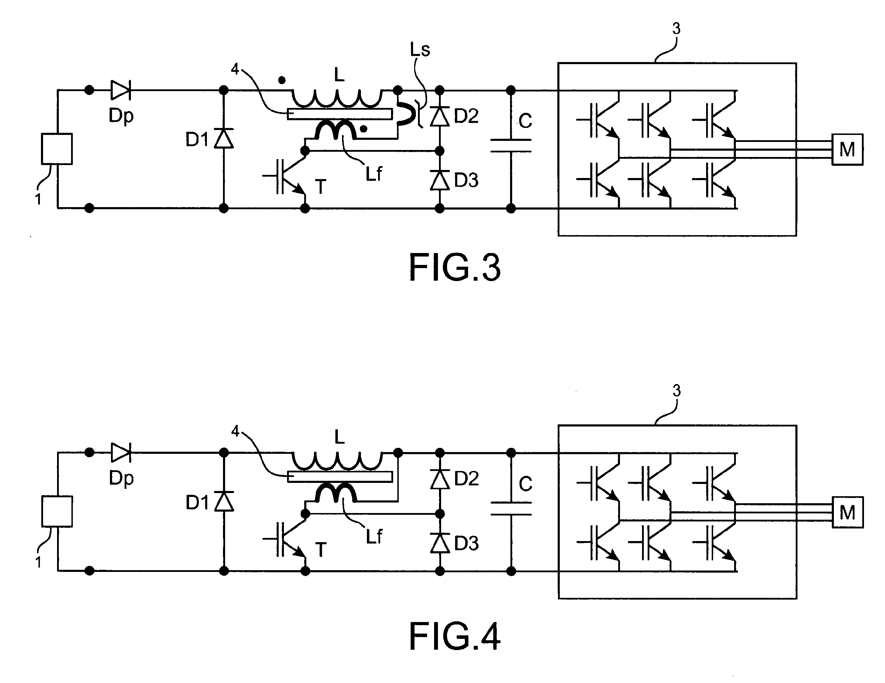

La figure 3 est un schéma électrique montrant un deuxième système de frein électrique selon l'invention. Dans ce mode de réalisation, le circuit magnétique 4 est commun à l'inductance L du filtre de mode différentiel et à l'inductance Lf de dissipation de l'énergie de freinage. Dans ce cas, les bobinages des inductances L et Lf sont couplés. La référence Ls désigne une inductance saturable, disposée en série avec l'inductance Lf, et destinée à maintenir la qualité du filtrage.

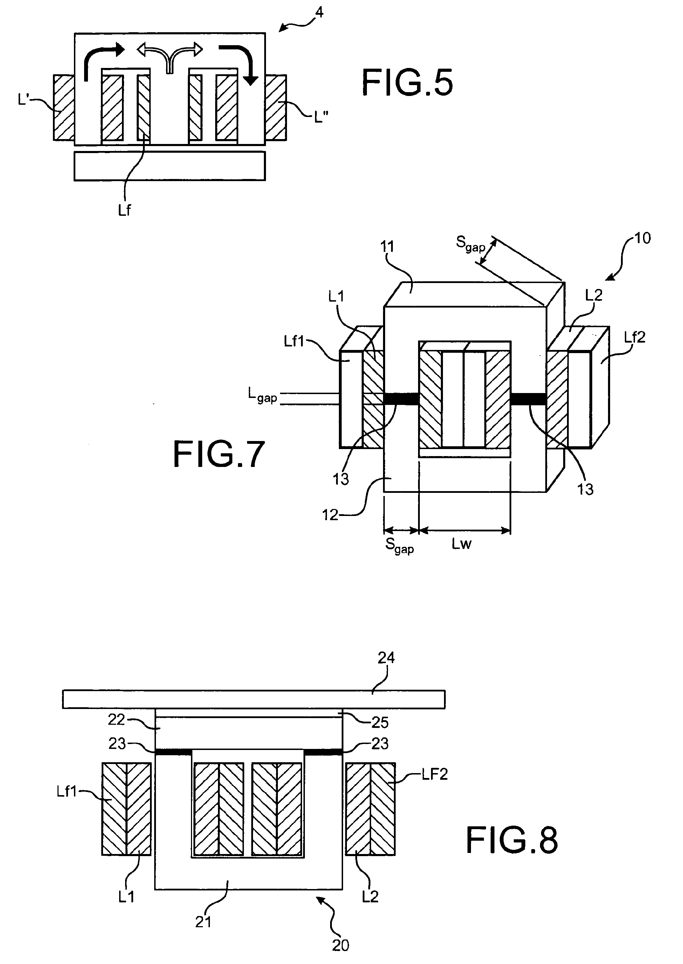

La figure 4 est un schéma électrique montrant un troisième système de frein électrique selon l'invention. Dans ce mode de réalisation, le circuit magnétique 4 est commun à l'inductance L du filtre de mode différentiel et à l'inductance Lf de dissipation de l'énergie de freinage. Contrairement au système de frein électrique montré sur le schéma de la figure 3, il n'y a pas de couplage magnétique entre les bobinages des inductances L et Lf. Pour obtenir ce résultat, on peut par exemple utiliser un circuit magnétique 4 de forme EI comme montré sur la figure 5. L'inductance L du filtre de mode différentiel est alors constituée de deux bobinages identiques L' et L" branchés en série et disposés chacun sur une jambe externe de la partie du circuit magnétique en forme de E. Pour un fonctionnement en mode filtrage, c'est-à-dire lors d'une phase où la puissance fournie par la source de tension continue est dirigée vers le moteur, il n'y a pas de flux magnétique dans la jambe centrale du E (voir flèches sombres sur la figure 5). L'inductance Lf de dissipation de l'énergie de freinage est bobinée sur la jambe centrale de la partie du circuit magnétique en forme de E. Lors d'un fonctionnement en mode freinage, les flux magnétiques circulant dans les jambes externes de la partie de circuit magnétique en forme de E sont de sens contraires (voir les flèches claires sur la figure 5). Il n'y a donc pas de tension électrique générée aux bornes de l'inductance L de filtre de mode différentiel.

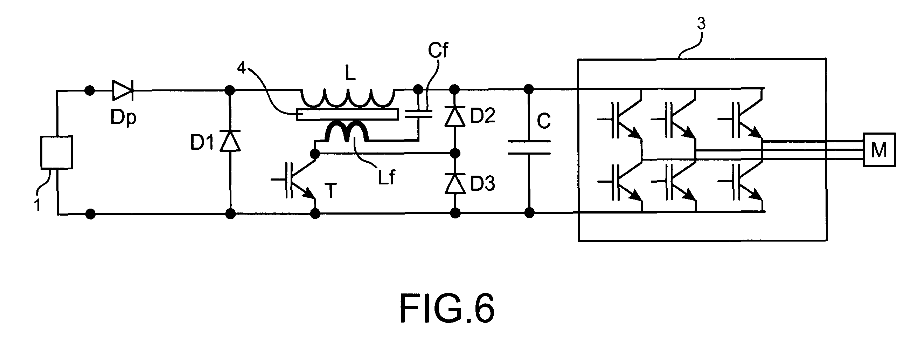

La figure 6 est un schéma électrique montrant un quatrième système de frein électrique selon l'invention. Dans ce mode de réalisation, le circuit magnétique 4 est commun à l'inductance L du filtre de mode différentiel et à l'inductance Lf de dissipation de l'énergie de freinage. Un condensateur Cf est ajouté en série avec l'inductance Lf. La valeur du condensateur Cf est choisie pour former un circuit résonnant (pour une fréquence d'environ 20 kHz) avec l'inductance Lf. Dans le cas de la figure 6, il s'agit donc d'un circuit résonnant série, cependant on peut envisager un circuit résonnant parallèle. L'intérêt de cette variante réside dans la diminution des pertes dans le commutateur électronique du frein et dans la modération du niveau d'interférence électro-magnétique (EMI).

La figure 7 est une vue en perspective d'un circuit magnétique équipé d'inductances, utilisable dans le système de frein électrique selon l'invention. Le circuit magnétique 10 comprend deux parties 11 et 12 en forme de C dont les extrémités respectives sont en regard. Le matériau du circuit magnétique est dans cet exemple du type FeSi à raison de 3% de Si en poids. Un entrefer en matériau non magnétique 13 (par exemple de l'air, un isolant électrique) est prévu entre les extrémités des parties 11 et 12 en regard afin d'éviter la saturation. Les inductances de filtrage et de dissipation d'énergie sont réparties chacune en deux enroulements comme le montre la figure 7. L'inductance de filtrage est d'abord bobinée. Elle comprend un premier bobinage L1 et un deuxième bobinage L2 connectés en série. L'inductance de dissipation est ensuite bobinée. Elle comprend un premier bobinage Lf1 et un deuxième bobinage Lf2 connectés en série. A titre d'exemple, les dimensions du circuit magnétique peuvent être les suivantes :
- largeur de l'entrefer 13, Lgap=1,05 mm,
- hauteur de la fenêtre de bobinage, Hw=14,7 mm
- largeur de la fenêtre de bobinage, Lw=11,5 mm
- longueur des côtés du circuit magnétique, Sgap=20,9 mm.

Les caractéristiques de l'inductance du filtre de mode différentiel sont par exemple : 240 µH, 50 A max, 10 A continu, résistance 40 mΩ, 28 spires. Les caractéristiques de l'inductance de dissipation sont par exemple : 15 µH, 50 A moyen, 150 A crête, résistance 2,5 mΩ, 7 spires.

Ce circuit magnétique équipé de ces inductances permet une application sur un bus DC de 300 V, 15 kW, 10 kJ. Ceci signifie que le temps de montée en puissance de freinage est de 15 kW en 10 µs. Avec une induction crête de 0,75 T, il est possible de dissiper 15800 W avec une commande PWM (modulation de largeur d'impulsion) 300 V à 23 kHz contrôlant 150 A crête pour 50 A moyen.

Si une chaleur spécifique de 400 J/°C.kg est prise en compte pour le FeSi3% et en supposant qu'une élévation de température de 50°C est tolérable, le circuit magnétique est capable d'absorber 10 kJ en mode par impulsion.

Si la capacité thermique n'est pas suffisante, l'adjonction de matériaux à changement de phase peut être envisagé.

En cas de dissipation moyenne élevée, un bon contact thermique avec le boîtier est facilement réalisable.

Si aucun flux thermique avec le reste du boîtier est souhaité, le circuit magnétique peut être équipé de son propre système de refroidissement.

La figure 8 illustre la manière de disposer un circuit magnétique utilisable dans le système de frein électrique selon l'invention, dans un boîtier logeant le système de frein électrique. Il s'agit, dans cette application, de pouvoir absorber une grande quantité d'énergie en un temps très court et de la dissiper par la suite, lentement vers la paroi du boîtier. Le circuit magnétique 20 comprend deux parties : une partie 21 en forme de C et une partie 22 en forme de I. Les parties 21 et 22 sont assemblées pour fermer le circuit magnétique avec interposition d'un entrefer 23 en matériau non magnétique et non conducteur. Comme pour la structure représentée à la figure 7, l'inductance de filtrage possède deux enroulements L1 et L2 connectés en série, l'inductance de dissipation possédant deux enroulements LF1 et LF2 connectés en série. La structure obtenue est fixée à la paroi 24 du boîtier par l'intermédiaire de moyens 25 possédant une résistance thermique adaptée. Cette disposition permet, en cas de forte impulsion d'énergie de freinage, de dissiper progressivement la chaleur générée vers la paroi du boîtier. La fixation peut se faire par collage.

L'invention procure un important gain de masse et de volume, notamment si la communalisation avec l'inductance de filtrage de mode différentiel est possible. L'utilisation de matériau magnétique haute température permettrait encore d'augmenter ce gain.

L'invention procure aussi un important gain en fiabilité et en durée de vie grâce à une excellente tenue au cyclage thermique.

Le principal intérêt de la solution réside dans la souplesse de gestion de l'énergie dissipée grâce aux innombrables possibilités d'adaptation du circuit magnétique par rapport au boîtier électronique. L'optimisation des conditions thermiques de l'ensemble est plus aisée.

Plus le niveau de puissance et d'énergie de freinage est élevé, plus la solution proposée devient intéressante. La limite inférieure d'intérêt devrait se situer vers quelques dizaines de watts.

La boucle d'asservissement de la puissance de freinage, qui régule la tension du bus DC, devient plus performante en termes de marge de stabilité et de temps de réaction.

## Revendications

1. Système de frein électrique pour une machine électromécanique (M) branchée aux bornes de sortie d'un onduleur (3) dont les bornes d'entrées sont alimentées par une source de tension continue (1), le système comprenant un circuit électrique branché entre les bornes d'entrée de l'onduleur (3) et comprenant, connectés en série :
- des moyens de dissipation d'une énergie électrique renvoyée par la machine électromécanique (M) aux bornes d'entrée de l'onduleur (3) lors d'une phase de freinage de la machine électromécanique,
- des moyens de commutation (T) destinés à fermer ledit circuit électrique lors d'une phase de freinage de la machine électromécanique et à ouvrir ledit circuit électrique en l'absence d'une phase de freinage de la machine électromécanique,
**caractérisé en ce que** les moyens de dissipation d'une énergie électrique comprennent une inductance (Lf) bobinée autour d'un circuit magnétique (4), l'énergie récupérée par l'inductance (Lf) lors d'une phase de freinage étant dissipée par perte d'hystérésis et courants de Foucault dans le circuit magnétique, aucune résistance de dissipation de l'énergie électrique renvoyée par la machine électromécanique n'étant prévue à l'entrée de l'onduleur.

2. Système de frein électrique selon la revendication 1, dans lequel un filtre de mode différentiel comprenant une inductance de filtrage (L), bobinée autour d'un circuit magnétique (2) étant placée en série entre la source de tension continue (1) et l'onduleur (3), et un condensateur de filtrage (C) étant placé entre les bornes d'entrée de l'onduleur (3), l'inductance de filtrage (L) et l'inductance de dissipation (Lf) ont un circuit magnétique (4) commun.

3. Système de frein électrique selon la revendication 2, dans lequel l'inductance de filtrage (L) et l'inductance de dissipation (Lf) ne sont pas couplées magnétiquement entre elles.

4. Système de frein électrique selon la revendication 3, dans lequel le circuit magnétique (4) est un circuit en EI ou EE, l'inductance de filtrage comprenant deux enroulements identiques (L', L") connectés en série, chaque enroulement étant bobiné sur une jambe externe du E, l'inductance de dissipation étant bobinée sur la jambe centrale du E.

5. Système de frein électrique selon la revendication 3, dans lequel le circuit magnétique (4) est un circuit en EI ou EE, l'inductance de dissipation comprenant deux enroulements identiques connectés en série, chaque enroulement étant bobiné sur une jambe externe du E, l'inductance de filtrage étant bobinée sur la jambe centrale du E.

6. Système de frein électrique selon la revendication 2, dans lequel l'inductance de filtrage (L) et l'inductance de dissipation (Lf) sont couplées entre elles.

7. Système de frein électrique selon la revendication 6, dans lequel le circuit magnétique (10) est un circuit en forme de O présentant deux branches opposées de bobinage, l'inductance de filtrage étant constituée de deux enroulements (L1, L2) connectés en série, chacun étant bobiné autour d'une branche, l'inductance de dissipation étant constituée de deux enroulements (Lf1, Lf2) connectés en série, chacun étant bobiné également autour d'une branche.

8. Système de frein électrique selon la revendication 7, dans lequel le circuit magnétique en forme de O (10) est constitué de deux parties (11, 12) en forme de C fixées entre elles au moyen d'entrefers (13) en matériau non magnétique.

9. Système de frein électrique selon l'une quelconque des revendications précédentes, dans lequel le circuit magnétique de l'inductance de dissipation est pourvu de moyens d'isolation thermique permettant de maîtriser le niveau du flux thermique vers une paroi d'un boîtier sur laquelle il est fixé.

## Claims

1. An electric brake system for an electromechanical machine (M) connected to the output terminals of an inverter (3) whereof the input terminals are supplied by a DC voltage source (1), the system comprising an electrical circuit connected between the input terminals of the inverter (3) and comprising, connected in series:
- a means for dissipating the electrical energy returned by the electromechanical machine (M) to the input terminals of the inverter (3) during a braking phase of the electromechanical machine,
- a switching means (T) intended to close said electrical circuit during a braking phase of the electromechanical machine and to open said electrical circuit in the absence of a braking phase of the electromechanical machine,
**characterized in that** the means for dissipating the electrical energy comprises an inductor (Lf) wound around a magnetic circuit (4), the energy recovered by the inductor (Lf) during a braking phase being dissipated by loss of hysteresis and eddy currents in the magnetic circuit (4), no dissipating resistance of the electrical energy returned by the electromechanical machine being provided to the input of the inverter.

2. The electric brake system according to claim 1, wherein a differential mode filter comprising a filtering inductor (L), wound around a magnetic circuit (2) being placed in series between the DC voltage source (1) and the inverter (3), and a filtering capacitor (C) being placed between the input terminals of the inverter (3), the filtering inductor (L) and the dissipation inductor (Lf) have a shared magnetic circuit (4).

3. The electric brake system according to claim 2, wherein the filtering inductor (L) and the dissipation inductor (Lf) are not magnetically coupled to each other.

4. The electric brake system according to claim 3, wherein the magnetic circuit (4) is an EI or EE circuit, the filtering inductor comprising two identical coils (L', L") connected in series, each coil being wound on an outer leg of the E, the dissipation inductor being wound on the central leg of the E.

5. The electric brake system according to claim 3, wherein the magnetic circuit (4) is an EI or EE circuit, the dissipation inductor comprising two identical coils connected in series, each coil being wound on an outer leg of the E, the filtering inductor being wound on the central leg of the E.

6. The electric brake system according to claim 2, wherein the filtering inductor (L) and the dissipation inductor (Lf) are coupled together.

7. The electric brake system according to claim 6, wherein the magnetic circuit (10) is an O-shaped circuit having two opposite winding branches, the filtering inductor being made up of two coils (L¹, L2) connected in series, each being wound around a branch, the dissipation inductor being made up of two coils (Lf1, Lf2) connected in series, each also being wound around a branch.

8. The electric brake system according to claim 7, wherein the O-shaped magnetic circuit (10) is made up of two C-shaped portions (11, 12) fastened to each other via air gaps (13) made from a non-magnetic material.

9. The electric brake system according to any one of the preceding claims, wherein the magnetic circuit of the dissipation inductor is provided with thermal insulating means making it possible to control the level of the thermal flow towards a wall of a case on which it is fastened.

## Patentansprüche

1. Elektrisches Bremssystem für eine elektromechanische Maschine (M), die mit den Ausgangspolklemmen eines Wechselrichters (3) verbunden ist, dessen Eingangspolklemmen durch eine Gleichstromquelle (1) gespeist werden, wobei das System einen elektrischen Stromkreis aufweist, der zwischen den Eingangspolklemmen des Wechselrichters (3) geschaltet ist und, in Reihe geschaltet, umfasst:
- Dissipations-Mittel einer elektrischen Energie, die von der elektromechanischen Maschine (M) in einer Bremsphase der elektromechanischen Maschine an die Eingangspolklemmen des Wechselrichters (3) abgegeben wird,
- Umschaltmittel (T), die dazu bestimmt sind, den elektrischen Stromkreis in einer Bremsphase der elektromechanischen Maschine zu schließen und diesen elektrischen Stromkreis zu öffnen, wenn keine Bremsphase der elektromechanischen Maschine stattfindet,
**dadurch gekennzeichnet,**
**dass** die Dissipations-Mittel einer elektrischen Energie eine Induktivität (Lf) mit einer Wicklung um einen Magnetkreis (4) umfassen, wobei die durch die Induktivität (Lf) während einer Bremsphase aufgenommene Energie durch Hystereseverlust und Foucaultschen Strom in dem Magnetkreis umgesetzt wird, wobei am Eingang des Wechselrichters kein Dissipationswiderstand elektrischer Energie von der elektromechanischen Maschine vorgesehen ist.

2. Elektrisches Bremssystem nach Anspruch 1, bei dem ein Differentialmodus-Filter mit einer Filterinduktivität (L), die um einen Magnetkreis (2) gewickelt ist, in Reihe zwischen der Gleichspannungsquelle (1) und dem Wechselrichter (3) geschaltet ist, und ein Filterkondensator (C), zwischen den Eingangspolklemmen des Wechselrichters (3) geschaltet ist, wobei die Filterinduktivität (L) und die Dissipationsinduktivität (Lf) einen gemeinsamen Magnetkreis (4) haben.

3. Elektrisches Bremssystem nach Anspruch 2, wobei die Filterinduktivität (L) und die Dissipationsinduktivität (Lf) magnetisch nicht miteinander gekoppelt sind.

4. Elektrisches Bremssystem nach Anspruch 3, wobei der Magnetkreis (4) ein EI- oder EE-förmiger Kreis ist, wobei die Filterinduktivität zwei identische, in Reihe geschaltete Wicklungen umfasst (L', L"), wobei jede Wicklung auf einem äußerten Schenkel des E gewickelt ist, wobei die Dissipationsinduktivität auf dem mittleren Schenkel des E gewickelt ist.

5. Elektrisches Bremssystem nach Anspruch 3, wobei der Magnetkreis (4) ein EI- oder EE-förmiger Kreis ist, wobei die Dissipationsinduktivität zwei identische, in Reihe geschaltete Wicklungen umfasst, wobei jede Wicklung auf einem äußeren Schenkel des E gewickelt ist, wobei die Filterinduktivität auf dem mittleren Schenkel des E gewickelt ist.

6. Elektrisches Bremssystem nach Anspruch 2, wobei die Filterinduktivität (L) und die Dissipationsinduktivität (Lf) miteinander gekoppelt sind.

7. Elektrisches Bremssystem nach Anspruch 6, wobei der Magnetkreis (10) ein O-förmiger Kreis mit zwei einander gegenüber liegenden Schenkeln ist, wobei die Filterinduktivität aus zwei in Reihe geschalteten Wicklungen (L1, L2) besteht, die jeweils auf einen Schenkel gewickelt sind, wobei die Dissipationsinduktivität aus zwei in Reihe geschalteten Wicklungen (Lfl, Lf2) besteht, die ebenfalls jeweils um einen Schenkel gewickelt sind.

8. Elektrisches Bremssystem nach Anspruch 7, wobei der O-förmige Magnetkreis (10) aus zwei C-förmigen Teilen (11, 12) besteht, die mittels Zwischenstücken (13) aus nicht magnetischem Werkstoff aneinander befestigt sind.

9. Elektrisches Bremssystem nach einem der vorigen Ansprüche, wobei der Magnetkreis der Dissipationsinduktivität mit Wärmeisolationsmitteln versehen ist, die es ermöglichen, die Höhe des Wärmestroms in Richtung einer Wand eines Gehäuses, an der er befestigt ist, zu beherrschen.
